# EUROPEAN PATENT APPLICATION

(11) **EP 2 811 710 A1**
(43) Date of publication of application: **10.12.2014**
(21) Application number: 13305750.5
(22) Date of filing: 04.06.2013
(51) Int. Cl.: H04L 29/06

(54) **Controlling the display of media streams**

(71) Applicant: ALCATEL LUCENT, 92100 Boulogne-Billancourt (FR)
(72) Inventor: Delegue, Gérard, 94230 Cachan (FR); Bouche, Nicolas, 75013 Paris (FR)
(74) Representative: ALU Antw Patent Attorneys

(57) **Abstract**

Embodiments relate to a method for controlling the display of media streams (Sᵢ) on a group (10) of terminals (8), executed by a controlling device (2), comprising:
- receiving (S3), from a media composition device (3), a request (RQ) for adding a first media stream on a screen of a first terminal (8) of said group (10),
- determining (S4) whether said request (RQ) is allowable, in function of a set of rules associated with said group (10), and
- if said request is allowable, sending (S5) a command (CMD) to said media composition device (3) for adding the first media stream on said screen of the first terminal (8).

## Description

### FIELD OF THE INVENTION

The present invention relates to the field of the display of media streams.

### BACKGROUND

Entertainment systems often include a plurality of devices each having a screen. For example, at home, an entertainment system may include a television, a video game console which includes its own screen, smart phones and tablets. These screens display at the same time multiple media streams such as audiovisual streams, web application, information from social networks, an electronic service guide...

Given the large number of screens, it may be difficult for the user to control all theses screens so as to display media streams with a good user experience. Moreover, the wishes of different users may contradict each other.

### SUMMARY

It is thus an object of embodiments of the present invention to propose a method and a device for controlling the display of media streams, which do not show the inherent shortcomings of the prior art.

Accordingly, embodiments relate to a method for controlling the display of media streams on a group of terminals, executed by a controlling device, comprising:
- receiving, from a media composition device, a request for adding a first media stream on a screen of a first terminal of said group,
- determining whether said request is allowable, in function of a set of rules associated with said group, and
- if said request is allowable, sending a command to said media composition device for adding the first media stream on said screen of the first terminal.

Correlatively, embodiments relate to a controlling device for controlling the display of media streams on a group of terminals, comprising:
- means for receiving, from a media composition device, a request for adding a first media stream on a screen of a first terminal of said group,
- means for determining whether said request is allowable, in function of a set of rules associated with said group, and
- means for sending a command to said media composition device for adding the first media stream on said screen of the first terminal, if said request is allowable.

Determining whether said request is allowable may comprise determining a priority of the first media stream and comparing the priority of the first media stream with the priority of at least one other media stream.

The set of rules may include at least one rule comprising a condition and an action, and determining whether said request is allowable may comprise executing said action if said condition is satisfied.

The action may comprise at least one of:
- assigning a priority to a stream,
- allowing said request,
- sending a command to said media composition device for adding the first media stream on said screen of the first terminal,
- sending a command to said media composition device for adding another media stream on a screen of a terminal,
- sending a command to said media composition device for removing another media stream on a screen of a terminal,
- refusing said request,
- sending a refuse command to said media composition device.

The request may comprise a terminal ID, a display area and at least one stream parameter for specifying the source type and/or the stream type of the first media stream, the set of rules including at least one rule which depends on said stream parameter.

The request may comprise a terminal ID, a display area and at least one context parameter for specifying context data of the first terminal, the set of rules including at least one rule which depends on said context parameter.

The request may comprise a terminal ID, a display area and a user ID for specifying the user of the first terminal, the set of rules including at least one rule which depends on said user ID.

The method may comprise receiving at least one configuration message specifying said set of rules associated with said group of terminals, and storing said set of rules.

The method may comprise:
- receiving, from the media composition device, a second request for removing a media stream from a screen of a terminal of said group,
- determining whether said second request is allowable, in function of said set of rules associated with said group, and
- if said second request is allowable, sending a second command to said media composition device for removing said media stream from said screen of the terminal.

Embodiments also relate to a method for displaying media streams on a group of terminals, executed by a media composition device, comprising:
- receiving source media streams,
- determining a composed media stream for at least one screen of a terminal of said group, by combining and/or adapting source media streams according to a media composition, said media composition specifying at least a display area of said screen for at least one source media stream,
- transmitting said composed media stream to said terminal,
wherein the method further comprises:
- receiving, from one of the terminals of said group, a request for adding a first source media stream on a screen of a first terminal of said group,
- transmitting said request to a controlling device,
- if a command for adding the first source media stream on said screen of the first terminal is received from said controlling device, modifying said media composition accordingly.

Correlatively, embodiments relate to a composition device for displaying media streams on a group of terminals, comprising:
- means for receiving source media streams,
- means for determining a composed media stream for at least one screen of a terminal of said group, by combining and/or adapting source media streams according to a media composition, said media composition specifying at least a display area of said screen for at least one source media stream,
- transmitting said composed media stream to said terminal,
wherein the composition device further comprises:
- means for receiving, from one of the terminals of said group, a request for adding a first source media stream on a screen of a first terminal of said group,
- means for transmitting said request to a controlling device,
- means for modifying said media composition according to a command for adding the first source media stream on said screen of the first terminal received from said controlling device.

Embodiments also relate to a computer program including instructions adapted to perform one of the above-mentioned methods when said program is executed by a computer.

Embodiments also relate to a system comprising a controlling device and at least one composition device.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a structural view of a system for controlling the display of media streams,
Figure 2 is a functional view of the system of figure 1,
Figure 3 is a flow diagram illustrating the functioning of the system of figure 1, and
Figure 4 is a structural view of an apparatus of the system of figure 1.

### DESCRIPTION OF EMBODIMENTS

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

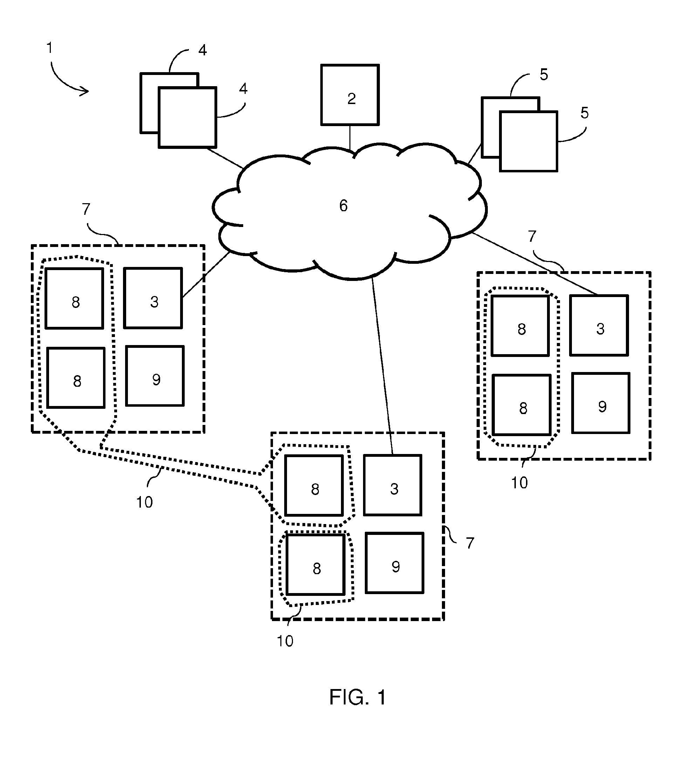

**Figure 1** shows a system 1 for controlling the display of media streams. The system 1 comprises a controlling device 2, a plurality of composition devices 3, media servers 4 and application servers 5 connected by a network 6. The system 1 also comprises terminals 8 and local media sources 9 connected to a composition device 3.

The controlling device 2 is for example a server located in an operator's network. It is in charge of controlling the display of source media streams Sᵢ, available from the media servers 4 and/or the local media sources 9, on the screens of the terminals 8.

A composition device 3 is for example a Set-Top-Box located in customer premises 7. It receives source media streams Sᵢ from the media servers 4 and/or the local media sources 9. The composition device 3 determines a composed media stream Cⱼ for a terminal 8 by combining and/or adapting source media streams Sᵢ, and transmits the composed media stream to Cⱼ the terminal 8 for display.

A terminal 8 may be any device comprising at least one screen for displaying media streams. It is for example a TV, a PC, a tablet, a smart phone, a video game device...

A local media source 9 may be any device capable of outputting a media stream Sᵢ. It is for example a DVD player, a video camera, a video game device, one of the terminals 8, a TV receiver... A local media source 9 may be included in the composition device 3, for example in the case of a Set-Top-Box which includes a Digital Terrestrial Television receiver.

A source media stream Sᵢ may be for example an audiovisual stream, a video stream, an image rendering from an application, a metadata stream such as subtitles, service guide, program guide...

A composition device 3 is responsible for a group 10 of terminals 8. A group 10 may include local terminals 8, located in the same user premises 7 as the composition device 3 and connected thereto for example by a local area network, and external terminals 8, located outside the user premises 7 of the composition device 3 and connected thereto through the network 6, either directly or via another composition device 3. In the system 1, a composition device 3 applies a composition to a group 10 of terminals 8. A composition is data defining how to combine and/or adapt source media streams Sᵢ for determining the composed media streams Cⱼ for the terminals 8. A composition comprises for example a plurality of entries, wherein one entry includes:
- An ID of a source media stream Sᵢ,
- An ID of a terminal 8,
- In case the terminal 8 has more than one screen, a screen ID,
- The rectangular area of the screen where the source media stream Sᵢ should be displayed,
- A z-index which define the order of display of objects in an area (for example, if a video stream with a z-index of 1 and a subtitle stream with a z-index of 2 are displayed on the same area of a screen, the subtitle stream is displayed over the video stream).

The composition applied to a group 10 of terminals 8 by a composition device 3 may change in function of a request from a terminal 8 of the group 10. However, a terminal 8 should not be allowed to change the composition without any constraints. For example, a terminal 8 should not be allowed to change the composition in a way that would lower the user experience too much. This could be the case when changing the display of a source media stream Sᵢ which includes text from a large area wherein the text can be read easily to a small area wherein the text is difficult to read. Also, if different terminals 8 want to change the composition in different manner, for example two terminals 8 want to display two different source media streams Sᵢ in the same area of the same screen, the conflict should be resolved.

To avoid such problems, the role of the controlling device 2 is to make sure that the composition applied to a group 10 of terminals 8 by a composition device 3 matches some criteria, as explained hereafter.

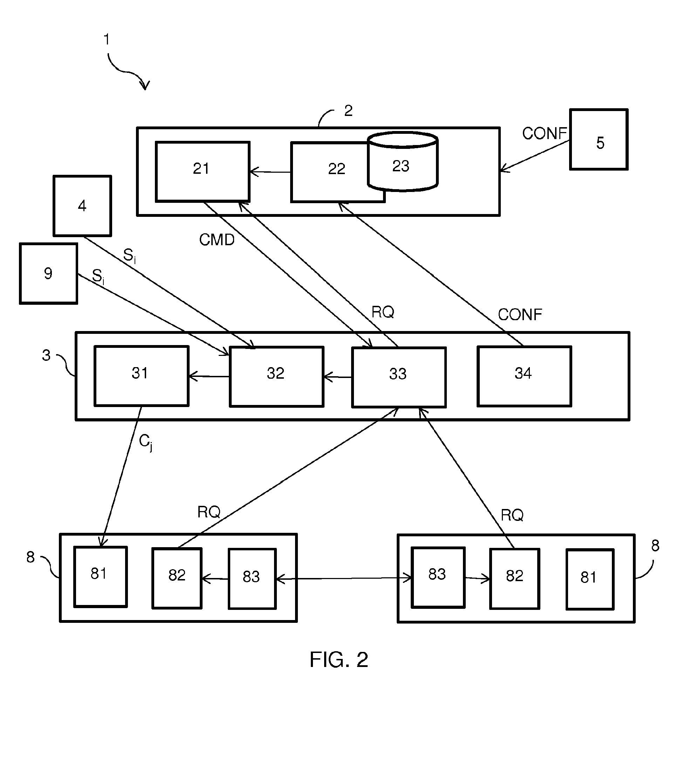

**Figure 2** is a functional view of some elements of the system 1.

As shown on figure 2, the controlling device 2 comprises a policy decision module 21, and a media composition policy server module 22 associated with a policy database 23. Moreover, a composition device 3 comprises a media dispatcher module 31, a media composition module 32, a policy enforcement module 33 and a configuration module 34. Also, a terminal 8 comprises a media display module 81, an interaction module 82 and a sensor module 83.

The media composition policy server module 22 is in charge of storing, in the policy database 23, composition policies for respective groups 10 of terminals 8. A composition policy is a set of rules and/or constraints that a composition should satisfy. For example, a composition policy may specify:
- the screens on which a source media Sᵢ can be displayed, in function of the type of the source media stream Sᵢ,
- the priority of a source media stream Sᵢ,
- the display area where a source media stream Sᵢ can be displayed for each screen,
- a minimum resolution to display a source media stream Sᵢ with sufficient user experience
- ...

These rules may comprises predefined rules, rules received from the configuration module 34, rules receives from an application server 5... There may be for example a composition policy for each group 10 of terminals 8.

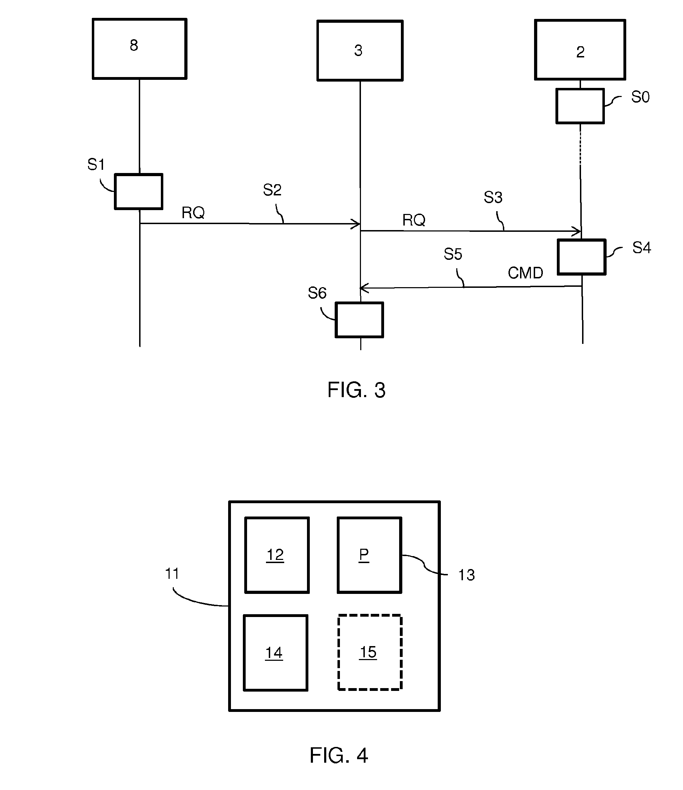

The policy decision module 21 is in charge of applying the rules from the media composition policy server module 22 in order to determine whether a request for a composition change is allowable. Details of the decision process will be described with reference to figure 3.

The policy enforcement module 33 receives requests from the terminals 8 to change the media composition, for example request to add or remove a source media stream Sᵢ on a particular screen. The policy enforcement module 33 transmits the request to the policy decision module 21 of the controlling device 2 and receives its response. Depending on the response of the policy decision module 21, the policy enforcement module 33 commands the media composition module 32 to change the composition, or not. In some cases, a user approbation is required before changing the composition. In this case, the policy enforcement module 33 sends a proposition of screen modification to the concerned terminal 8 and receives its response before commanding a change of the composition if the response is positive.

The media composition module 32 is in charge of determining the composed media streams Cⱼ by combining and/or adapting the source media streams Sᵢ, according to the composition defined for the group 10 of terminals 8. The media composition module 32 takes into account the commands of the policy enforcement module 33 for changing the composition.

The media dispatcher module 31 is in charge of transmitting the composed media streams Cⱼ determined by the media composition module 32 to the respective terminals 8 of the group 10.

The configuration module 34 allows interacting with the media composition policy server module 22. The configuration module 34 allows specifying which terminals 8 are included in the group 10 associated with the composition device 3. The configuration module 34 also allows configuring the rules of the policy of the group 10 stored in the policy database 23.

The display module 81 of a terminal 8 receives the composed media stream Cⱼ and displays it and the screen 15 of the terminal 8. In case of a terminal 8 with more than one screen, the display module 81 receives the respective composed media streams Cⱼ and displays them on the corresponding screens 15.

The interaction module 82 decides to request changes of the composition and transmits the requests to the policy enforcement module 33 of the composition device 3. A request may be determined for example in response to:
- a command input by a user on an input interface of the terminal 8,
- an command from an application running on the terminal,
- a trigger from the sensor module 83.

A request for changing the composition may be for example a request to add or remove a source media stream Sᵢ on the screen of the terminal 8 which sends the request, and/or a request to add or remove a source media stream Sᵢ on the screen of another terminal 8.

The sensor module 83 detects elements of the environment of the terminal 8 and triggers requests in function of the detected environment. Examples of elements triggering a request are:
- a short distance between two terminals 8,
- the 3D position of the terminal 8,
- a predetermined acceleration,
- the time,
- the categories of application used on the terminal 8,
- ...

**Figure 3** is a flowchart which illustrates the functioning of the system 1.

Initially, a composition policy for a group 10 of terminals 8 is configured in the media composition policy server module 22 and stored in the policy database 23 (step S0) For example, the configuration module 34 sends the following configuration messages CONF to the media composition policy server module 22:
- Notification of the composition device 3, which include a composition device ID,
- Notification of a terminal 8, which include a terminal ID and terminal characteristics such as type of terminal (TV, smart phone, tablet, video game device,...), screen characteristics (resolution, size, capacity to display content from more than one video source...), position of the screen (in case of a terminal with more than one screen, this may indicate the possible display of an image split on different screen),
- Notification of a group 10 of terminals 8, which include a group ID, a list of terminals ID, rules of the policy for the group. A rule may include:
   - A rule ID,
   - A condition. The condition may relate to any of the parameters above (type of terminals, screen size,...) and on parameters included in the request (for example parameters specified by the sensor module 83). The condition may result for a logic combination of sub-conditions.
   - An action. The action specifies what the policy decision module 21 should do in case the condition is satisfied. The action may be for example a modification of an internal state of the policy decision module 21 or sending a command to the composition device 3.

A terminal 8 may decide to request a change of the composition (Step S1). For example, as explained before, a terminal 8 decide to request a change of the composition in response to a command input by a user on an input interface, a command from an application running on the terminal, or a trigger from the sensor module 83.

When the terminal 8 decide to request such change, it sends a request RQ to the composition device 3 (Step S2).

For example, a request RQ for adding a source media stream Sᵢ on the screen of a terminal 8 includes:
- a source media stream ID specifying the source media stream Sᵢ to add,
- the source of the source media stream (Digital Terrestrial TV receiver, DVD player, TV application, VCR, video camera, video game device...)
- the type of the source media stream (audiovisual, subtitles, rendering from an application...)
- a terminal ID specifying on which terminal 8 the source media stream should be added (this can be the same as the terminal 8 which sends the request, or another terminal 8 of the group 10),
- in case the terminal has more than one screen, a screen ID specifying on which screen the source media stream should be added,
- the display area of the screen where the source media stream should be added,
- a z-index specifying how different media stream in the same area should be displayed (for example a media stream with a higher z-index is displayed over another media stream with a lower z-index),
- context data specifying the context of the terminal 8, for example provided by the sensor module 83, and
- a user ID specifying the user of the terminal 8 which sends the request.

As another example, a request RQ for removing a source media stream Si from a terminal may include:
- a source media stream ID specifying the source media stream Sᵢ to remove,
- a terminal ID specifying from which terminal 8 the source media stream should be removed (this can be useful in case the same source media stream is displayed on more than one terminal and should only be removed from one of them), and a screen ID in case the terminal has more than one screen, and
- a user ID specifying the user of the terminal 8 which sends the request.

A request RQ may also be composed of more than one sub-requests. For example a request may include a request to remove a source media stream Sᵢ from one terminal 8 and to add the same media stream to another terminal 8. From the point of view of the viewer, this has the effect of transferring a media stream from one terminal 8 to another.

When the composition device 3 receives a request RQ from a terminal 8, it transmits the request RQ to the controlling device 2 (step S3).

When the controlling device 2 receives a request RQ, it determines whether said request RQ is allowable, in function of the composition policy associated with the group 10. In other words, the controlling device 2 determines whether said request RQ is allowable by applying the set of rules of the group 10. Furthermore, in case the request RQ is allowable, the controlling device 2 determines additional consequences of the request RQ.

Then, if it has been determined at step S4 that the request RQ is allowable, the controlling device 2 sends a command CMD for changing the composition. For example, a command CMD for adding a source media stream may comprise:
- a source media stream ID,
- a terminal ID specifying on which terminal 8 the source media stream should be added, and in case the terminal has more than one screen, a screen ID,
- the display area of the screen where the source media stream should be added, and
- a z-index for the source media stream.

As another example, a command CMD for removing a source media stream may include:
- a source media stream ID,
- a terminal ID specifying from which terminal 8 the source media stream should be removed, and in case the terminal has more than one screen, a screen ID.

Also, a command CMD for changing the display of a source media stream which is currently displayed may include:
- a source media stream ID,
- a updated terminal ID and/or an updated display area and/or an updated z-index.

On the other hand, if it has been determined at step S4 that the request RQ is not allowable, the controlling device 2 sends a refuse response to the composition device 3 (not shown).

When it receives a command CMD, the composition device 3 changes the composition accordingly (Step S6). As explained before, the policy enforcement module 33 commands the media composition module 32 to change the composition.

In the system of figure 1, the composition applied by a composition device 3 may be changed in reaction to requests from the terminals 8, thereby providing flexibility and adaptation to the wishes and/or context of the users. However, the changes of the composition are controlled by the controlling device 2 for compliance with a composition policy, thereby ensuring a satisfactory user experience. Also, the composition policy may specify how to resolve the conflicts between the requests of different users (for example based on users' priorities).

In an embodiment, step S4 comprises applying the rules to assign priorities to the source media streams of the composition, and comparing the priorities of the sources media streams which overlap in the display area of a screen. For example, the composition policy may comprise the following rules:
- R1: The condition is « type of source media stream = video game » and the action is « set priority to low ».
- R2: The condition is « type of source media stream = TV » and the action is « set priority to high ».
- R3: The condition is « Two media stream are requested on screen X » and « priority of stream S₁ > priority of stream S₂ » and the action is « Display stream S₁ on screen X » et « assess the display of stream S₂ on screen Y ».

A first request RQ1 for adding a source media stream of the TV type on screen X will trigger rule R2. Then, a second request RQ2 for adding a source media stream of the video game type on screen X will trigger rules R1 and R3. This will have as a consequence the display of the source media stream of the video game type on the screen Y.

After the initial configuration mentioned before, the composition policy for a group 10 may be updated (not shown) during the functioning of the system 1. For example, the configuration module 34 may send configuration messages CONF to the media composition policy server module 22 for adding or removing terminals 8 from a group 10, for adding, removing or updating a rule... Also, an application server 5 may send such configuration messages CONF to the media composition policy server module 22. In that case, the policy decision module 21 may check that the composition still satisfies the updated composition policy and, if this is not the case, send command CMD to the composition device to adapt the composition to the updated composition policy.

Although figure 1 shows a system 1 wherein the controlling device 2 controls the display of media streams for a plurality of groups 10 of terminals 8, the controlling device 2 may control the display of media stream for a single of group 10 in some embodiments. In that case, the controlling device 2 and the composition device 3 may be parts of the same apparatus, for example a Set-Top-Box.

**Figure 4** is a structural view of an apparatus 11, which may be for example the controlling device 2, a composition device 3 or a terminal 8 of the system 1. The apparatus 11 comprises a processor 12, a memory 13, a communication interface 14 and, at least in the case of a terminal 8, a screen 15. The processor 12 allows executing computer programs stored in the memory 13, and the functional modules shown on figure 2 may correspond to such execution of a computer program P. The communication interface 14 allows communicating with the other devices of the system 1.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for controlling the display of media streams (Sᵢ) on a group (10) of terminals (8), executed by a controlling device (2), comprising:
- receiving (S3), from a media composition device (3), a request (RQ) for adding a first media stream on a screen of a first terminal (8) of said group (10),
- determining (S4) whether said request (RQ) is allowable, in function of a set of rules associated with said group (10), and
- if said request is allowable, sending (S5) a command (CMD) to said media composition device (3) for adding the first media stream on said screen of the first terminal (8).

2. Method according to claim 1, wherein determining (S4) whether said request (RQ) is allowable comprises determining a priority of the first media stream and comparing the priority of the first media stream with the priority of at least one other media stream.

3. Method according to one of claims 1 and 2, wherein said set of rules includes at least one rule comprising a condition and an action, and wherein determining (S4) whether said request (RQ) is allowable comprises executing said action if said condition is satisfied.

4. Method according to claim 3, wherein said action comprises at least one of:
- assigning a priority to a stream,
- allowing said request,
- sending a command to said media composition device (3) for adding the first media stream on said screen of the first terminal (8),
- sending a command to said media composition device (3) for adding another media stream on a screen of a terminal (8),
- sending a command to said media composition device (3) for removing another media stream on a screen of a terminal (8),
- refusing said request,
- sending a refuse command to said media composition device (3).

5. Method according to one of claims 1 to 4, wherein said request (RQ) comprises a terminal ID, a display area and at least one stream parameter for specifying the source type and/or the stream type of the first media stream, the set of rules including at least one rule which depends on said stream parameter.

6. Method according to one of claims 1 to 5, wherein said request (RQ) comprises a terminal ID, a display area and at least one context parameter for specifying context data of the first terminal, the set of rules including at least one rule which depends on said context parameter.

7. Method according to one of claims 1 to 6, wherein said request (RQ) comprises a terminal ID, a display area and a user ID for specifying the user of the first terminal, the set of rules including at least one rule which depends on said user ID.

8. Method according to one of claims 1 to 7, comprising receiving (S0) at least one configuration message (CONF) specifying said set of rules associated with said group of terminals, and storing said set of rules.

9. Method according to one of claims 1 to 8, comprising
- receiving, from the media composition device (3), a second request (RQ) for removing a media stream from a screen of a terminal (8) of said group (10),
- determining whether said second request (RQ) is allowable, in function of said set of rules associated with said group (10), and
- if said second request is allowable, sending a second command (CMD) to said media composition device (3) for removing said media stream from said screen of the terminal (8).

10. Computer program (P) including instructions adapted to perform the method of one of claims 1 to 9 when said program is executed by a computer (11).

11. Controlling device (2) for controlling the display of media streams (Sᵢ) on a group (10) of terminals (8), comprising:
- means (12, 13, 14) for receiving (S3), from a media composition device (3), a request (RQ) for adding a first media stream on a screen of a first terminal (8) of said group (10),
- means (12, 13, 14) for determining (S4) whether said request (RQ) is allowable, in function of a set of rules associated with said group (10), and
- means (12, 13, 14) for sending (S5) a command (CMD) to said media composition device (3) for adding the first media stream on said screen of the first terminal (8), if said request is allowable.

12. Method for displaying media streams on a group (10) of terminals (8), executed by a media composition device (3), comprising:
- receiving source media streams (Sᵢ),
- determining a composed media stream (Cⱼ) for at least one screen of a terminal (8) of said group (10), by combining and/or adapting source media streams (Sᵢ) according to a media composition, said media composition specifying at least a display area of said screen for at least one source media stream (Sᵢ),
- transmitting said composed media stream (Cⱼ) to said terminal (8),
wherein the method further comprises:
- receiving (S2), from one of the terminals (8) of said group (10), a request (RQ) for adding a first source media stream (Sᵢ) on a screen of a first terminal (8) of said group (10),
- transmitting (S3) said request (RQ) to a controlling device (2),
- if a command (CMD) for adding the first source media stream on said screen of the first terminal is received from said controlling device (2), modifying (S6) said media composition accordingly.

13. Computer program (P) including instructions adapted to perform the method of claim 12 when said program is executed by a computer (11).

14. Composition device (3) for displaying media streams on a group (10) of terminals (8), comprising:
- means (12, 13, 14) for receiving source media streams (Sᵢ),
- means (12, 13, 14) for determining a composed media stream (Cⱼ) for at least one screen of a terminal (8) of said group (10), by combining and/or adapting source media streams (Sᵢ) according to a media composition, said media composition specifying at least a display area of said screen for at least one source media stream (Sᵢ),
- transmitting said composed media stream (Cⱼ) to said terminal (8),
wherein the composition device (3) further comprises:
- means (12, 13, 14) for receiving (S2), from one of the terminals (8) of said group (10), a request (RQ) for adding a first source media stream (Sᵢ) on a screen of a first terminal (8) of said group (10),
- means (12, 13, 14) for transmitting (S3) said request (RQ) to a controlling device (2),
- means (12, 13, 14) for modifying (S6) said media composition according to a command (CMD) for adding the first source media stream on said screen of the first terminal received from said controlling device (2).

15. System (1) comprising a controlling device (2) according to claim 11 and at least one composition device (3) according to claim 14.
